# EUROPEAN PATENT SPECIFICATION

(11) **EP 0 508 042 B1**
(45) Date of publication and mention of the grant of the patent: **24.07.1996**
(21) Application number: 92100568.2
(22) Date of filing: 15.01.1992
(51) Int. Cl.: B29B 13/10, B29B 17/00

(54) **Method and apparatus for pulverizing difficult to crush plastic materials**
Verfahren und Vorrichtung zum Pulverisieren von schwer zu zerbrechenden Kunststoffen
Méthode et dispositif pour pulveriser des matériaux plastiques difficiles à broyer

(30) Priority: 13.03.1991 JP 126957/91
(43) Date of publication of application: 14.10.1992
(73) Proprietor: ASAOKA Co., Ltd., Tokyo (JP); ASAHI DIAMOND INDUSTRIAL CO. LTD., Tokyo (JP)
(72) Inventor: Toshihiko, Asada, Komae-shi, Tokyo (JP); Tomitaka, Mase, Yamato-shi, Kanagawa-ken (JP)
(74) Representative: Patentanwälte Ruff, Beier, Schöndorf und Mütschele

(56) References cited:
- BE-A- 485 440
- NL-A- 7 314 639
- US-A- 3 916 579
- US-A- 4 589 231

## Description

### BACKGROUND OF THE INVENTION

The invention of this application relates to a pulverizing method and apparatus for effectively pulverizing very difficult to crush scrapped fiber reinforced thermosetting plastic (hereinafter referred as FRP), including reject materials of such generated during production, into powder of appropriate sizes and distribution for the purpose of recycling.

The powder is one form of the raw materials being used in many of the industries such as inorganic chemical, organic chemical, metal, food, etc. and is also a form of the products manufactured. Consequently, in the field of application of this invention, it contributes to improving the characteristics of the properties being produced in the above respective fields. Also, it is possible to dramatically improve the characteristics of the various composite materials in the above respective fields.

The so-called fiber reinforced plastic (FRP) are resins containing glass fiber as reinforcing material (GFRP), organic fiber, etc. and as these scrapped materials also have basic characteristics excelling in durability, high strength, light weight, etc., these are difficult to crush and particularly, in the thermosetting resins, it is very difficult to cut the fibers.

The type of thermosetting resin varies depending on the purpose but there are middle corrosion resistant unsaturated polyester resin of the iso group, high corrosion resistant unsaturated polyester resin of the bisphenol group, oxidation resistant unsaturated polyester resin of the acid group and also, high corrosion resistant epoxy resin, etc.

For the types of molded products of GFRP alone as an example, it is widely used as industrial structural material to start with, transportation apparatus (automobiles, trains), construction materials (flat/corrugated sheets, sewage tanks, toilet bowls, sundries, helmets, cooling towers, bath units), etc.

Generally, methods of pulverizing material into powder is roughly classified into (1) crushing by impact stress and (2) breaking up by compression and there are numerous pulverizing apparatus utilizing these processes which have been designed and commercialized. However, there were no existing pulverizing method and apparatus which satisfies the purpose of effectively pulverizing non-crushable, non-breakable FRP to produce an uniform grained powder.

For example, regarding scrapped FRP materials in Japan, for the manufacturer, the trimming refuses, polymer residues, molding rejects, etc. generated in production are practically all hauled away by outside industrial waste disposal companies for disposal in land fills and these increased cost burdens are oppressing business operations. For the users, volume of scrapped material is positively increasing in housing reforms, etc. and in case of unit bathrooms alone, 100,000 - 150,000 yearly and more than 10,000 tons yearly of flat, corrugated are being disposed. Also, there are 220,000 coastal fishing vessels and 100,000 leisure yachts being disposed and part of these are already being abandoned illegally. These large volume of scrapped materials from the standpoint of global environmental protection are presenting a big problem. In other words, FRP, when buried in the gound, will not decompose semipermanently, when incinerated, the atmosphere is contaminated with waste gas, and heavy metals, etc. in concentrated residues can cause secondary pollution problems, etc. In this way, difficult to crush plastics or FRP are widely used in the industries but there are no thorough measures to cope with scrapped materials hereafter and also, no processing technology and method have been established yet.

BE-A-485440 discloses a method and apparatus, which pulverize plastic materials by virtue of a grinding effect utilizing a rotating wheel having particles on the outer surface of the wheel.
NL-A-314639 discloses a technique wherein a diamond particle layer is provided on the outer circumference of the grinding tool.
US-A-3916579 discloses a grinding wheel having a lot of grooves on the outer circumference of the grinding wheel.

SU-4-668700 discloses a method for treating the scraps of glass fiber reinforced plastics, the method grinding the scraps on the grinding surface so they are pulverized.

JP-A-63039648 cf. the preambles of claims 1 and 2 respectively, discloses a method and an apparatus for pulverizing scraps of glass fiber reinforced plastics using a rotating tool having cemented carbide particles on the surface thereof.

US-A-4589231 discloses the cutting of a lense made from polycarbonate in which a high volume high velocity ambient air flow is used to cool the tool and the lense and to remove the waste material.

US-A-3938345 discloses the use of a corona discharge for cooling a cutting tool. The scrapings removed by the cutting tool are fetched by a metallic gauze electrically connected to the corona focusing ring.

The invention proposes a method with the features of the claim 1 and an apparatus with the features of claim 2.

### SUMMARY OF THE INVENTION

This invention, in view of such situation as these, from the standpoint of pollution control and also, effective recycling of material resources, is an extremely effective means and by being able to readily pulverize scrapped materials of FRP, it can be recycled as raw material and the object is to put recycling into practical use by, for example, compounding with inorganic material of the cement group or with FRP, etc.

In developing this invention, it was a prerequisite to satisfy the following points. Firstly, absolutely no secondary pollution to be created. Secondly, powder to have all the physical conditions needed for recycling. Thirdly, be able to effectively pulverize all materials, etc. As it is the purpose to recover as powder, the method of pulverizing mechanically was selected without utilizing incineration or decomposition by heating and dissolving chemically with chemicals, etc. However, in evaluating various types of general pulverizers being widely used, the conclusion reached was that none were adequate for pulverizing FRP. In other words, in the method of crushing by impact, for example hammer mill, it was found that it is possible to break up the material but impossible to make the material into powder. On the other hand, in the method of crushing by compression, for example stamping mill, it was found that is possible to deform the material but impossible to break up the structure and not possible to achieve the above purpose.

The inventor of this invention perceived using a grinding process untried to date as a means for completely pulverizing/recovering difficult to crush FRP under a pollution-free condition. Generally, in a grinding process, a predetermined amount of the surface of the material to be processed is accurately removed and the purpose is to finish the material surface to specified dimensions and make it smooth. The removed material powder becomes a waste.

However, the inventor took an opposite approach in having all the above material ground totally into a powder. The invention based on this new concept provides a pollution-free pulverizing method and apparatus for effectively pulverizing difficult to crush FRP.

This applied invention of a method for pulverizing difficult to crush plastic materials is to pulverize it into fine pulverized powders by grinding effects in utilizing a rotating diamond wheel having dense diamond particles on the outer surface of the wheel. Also, this applied invention of an apparatus for pulverizing difficult to crush plastic materials is composed of a diamond wheel with diamond particles densely adhered to the outer surface of the wheel and also, with numerous hollows positioned to the outer surface of the wheel, means for driving the diamond wheel, means for pushing to press the difficult to crush plastic materials against the outer surface of the diamond wheel, and means for collecting the fine pulverized powders of the plastics.

By the pulverizing process of this application, the difficult to crush plastic materials of FRP, can be efficiently pulverized into powder of appropriate grain size and grain distribution to enable recycling. Also, by the pulverizing apparatus of this application, difficult to crush plastic materials of FRP, etc. are pressed against the outer surface of the diamond wheel with means for pushing and are efficiently pulverized and the powder of FRP, produced are efficiently collected by the powder collector.

Examples of the invention of this application are described as follows. Firstly, the reason for using diamond for pulverization was that the hardness of thermosetting resins reinforcing by glass fiber or carbon fiber are extremely hard and when using the grinding wheel with general abrasive grains, such as alumina (WA), carborundum (GC), cubic boron nitride, etc., the wear of the grinding wheel is very great and not only does it need to be replaced frequently but inadequate from the standpoint of productivity and economics and as large amounts of grinding grits are mixed with the powder product, it was found that it presented a problem in quality of the recycled powder. For the types of diamond grits, the industrial type natural diamond or synthetic diamond being currently sold in the market can be used.

On the other hand, in regard to the grain size of the diamond grit, as a result of testing various sized diamond grits, it was found that the grain distribution of the fine pulverized powders produced and the pulverizing efficiency varied greatly. In grinding with a wheel which has large grained diamond grits, the grain size of the powder produced was rough and the smaller the grit size, the grain size of the powder produced was finer. Therefore, in case of the grit size being smaller than 270 mesh (53 micron), the powder became too fine and took too much time to pulverize and was found to be ineffective.

Also, in regard to the construction of the diamond wheel, a wheel with diamond grit densely adhered on to the surface of metal, ceramic, resin, etc. base wheels by electroplating, deposition and sintering methods are recommended. By making the diamond wheel with these constructions, it is possible to put numerous diamond grits on the surface which becomes the cutting blade to efficiently pulverize the plastic materials. In overlooking efficiency slightly, it is possible to use general diamond wheels with diamond grit bonded with resin, metal and vitrified type bonds, etc. to carry out pulverizing in the same manner as above.

Furthermore, by putting suitable concaves such as spirals on the outer surface of the wheel, without any clogging of the outer surface of the wheel, fine pulverized powders can be quickly and continuously produced and recovered.

The pulverizing apparatus of this application, shown in the figure as one example, by bundling scrapped FRP, etc. material cut to size to fit into the feed entrance on the dustproof cover of the pulverizer is pressed against the rotating diamond wheel and by the grinding force of the diamond wheel, the material is made into powder. By adjusting the pressing pressure of the pushing unit, the feed speed of the material is controlled and fine adjustment of the powder grain size can be controlled. Also, in order to increase the recovery efficiency of FRP, etc. powder and to protect the operator from the effects of powder, a dustproof cover and powder collector as described above are incorporated. Furthermore, to separate powder from non-powder crushed material of edgings and cotton like glass fibers, a filter can be installed in the powder collector or a separator such as a separating tank can be placed between the pulverizing compartment and powder collector. Also, in case the suction capability of the powder collector is strong, the dustproof cover can be changed to a simple wheelcover to observe the pulverizing operations and in case the suction is weak, an air curtain can be installed at the scrapped material feeding entrance to prevent powder from scattering outside and also, the air supplied to the air curtain can be utilized for cooling the diamond wheel.

It is very effective to place air nozzles facing the outer surface of the diamond wheel inside the above dustproof cover and installing a nozzle type static electricity remover operated by forming ions with high frequency high voltage corona discharge. The blown ionic air removes the static electricity and therefore, adhesion of powder on the wheel and inside the dustproof cover is prevented and also, the wheel is forced cool with the blown air.

### BRIEF DESCRIPTION OF THE DRAWINGS

Other feature and advantages of the present invention will be apparent from the following description taken in connection with the accompanying drawings, wherein:
Fig. 1 is a front view of pulverizing apparatus of this application with the lid of the dustproof cover removed;
Fig. 2 is a side view of pulverizing apparatus shown in Fig. 1 with a part of the dustproof cover removed; and
Fig. 3a, 3b, 3c are detail views of diamond wheel used in this invention, Fig. 3a is elevation partly in section of the wheel, Fig. 3b is partially sectional view of outer surface, Fig. 3c is a side view of mounting hole.

### DESCRIPTION OF THE PREFERRED EMBODIMENTS

Embodiments of this invention will now be described by referring to the attached drawings.

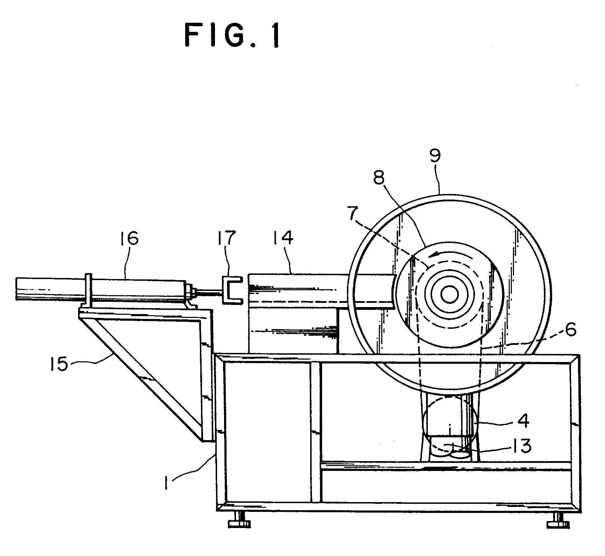

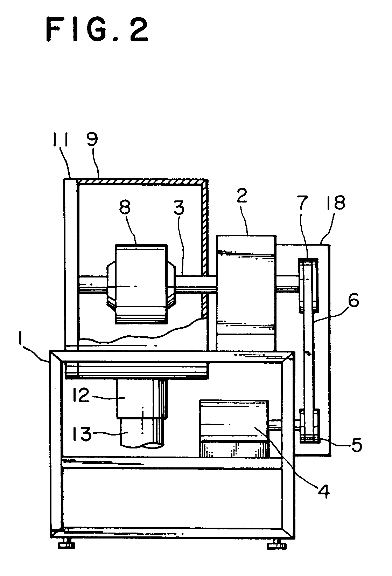

In Fig. 1 and Fig. 2, a wheel spindle 3 supported spindle stock 2 on top of the frame 1 of the apparatus is rotated by the motor 4, motor pulley 5, belt 6 and spindle pulley 7. The diamond wheel 8 is fixed on to the spindle 3, wheel 8 is covered by the dustproof cover consisting of dustproof cover body 9 and lid 11, the duct 12 is placed on the bottom of the dustproof cover and through the duct 12 and hose 13, the powder is collected by the powder collector connected to it.

Also, the table 14 for placing the material is fixed on to the frame 1 facing the outer surface of the wheel 8 and at the inner edge of this table 14, the material feed entrance is located on the side of the dustproof cover body 9 above and the inner edge of the table 14 is put inside the dustproof cover through this entrance and placed close to the outer surface of the wheel 8. Furthermore, the air cylinder support 15 and air cylinder 16 are attached to the side of frame 1 and with the pushing unit 17 fixed on to the tip of the piston of air cylinder 16, the materials of FRP, etc. placed on the table 14 are pressed against the outer surface of the diamond wheel 8. Furthermore, the pulley cover 18 covers the motor pulley 5, belt 6 and spindle pulley 7.

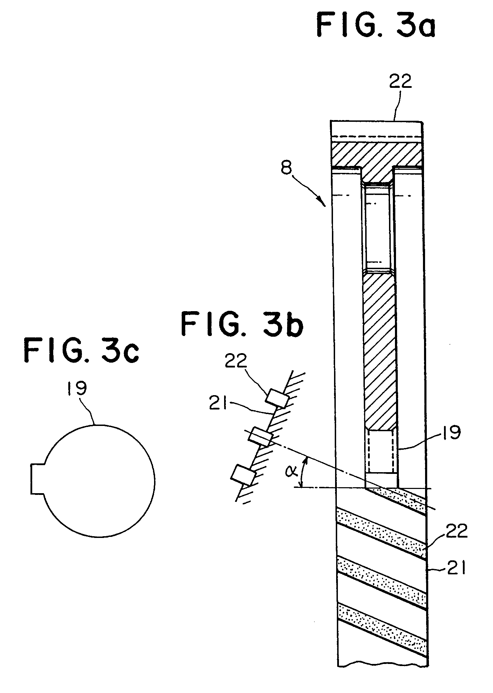

Next, Fig. 3a, 3b, 3c are descriptive figures of the diamond wheel 8 and Fig. 3a is a cross section view of a part of the wheel, Fig. 3b is a cross section view of the wheel surface, Fig. 3c is a side view of the wheel mounting hole 19. The base material of the wheel 8 are metal, ceramic, resin, etc. and in order to form a groove 21 to create concave effects on the outer surface, numerous spiral shaped twisted angle α protrusions 22 are placed on the wheel and on the surface of protrusion 22, diamond particles of grain size of more than 270 mesh are densely adhered on to the surface by electro-plating, deposition or sintering processes. Also, the width of the groove 21 compared to the protrusion 22 is made narrower than shown in the figure and on the other hand, by making the twisted angle α suitably larger, even if the material is a sheet, the tip of the sheet will not get caught in the groove 21 and enable good pulverization to be carried out.

As the pulverizing apparatus of this invention is constructed as per above, the materials of FRP, etc. placed on the table 14 are pressed against the outer surface of the diamond wheel 8 by the air cylinder 16 and pushing unit 17 for pulverization and the powder produced by pulverization passes through the duct 12, hose 13 and ultimately collected by the attached powder collector system.

## Claims

1. A method for pulverizing scrapped fiber reinforced thermosetting plastic materials comprising rotating at high speed a grinding wheel (8), on the outer surface of which protrusions (22) provided with particles and separated by grooves (21) void of particles are formed, and pressing said scrapped fiber reinforced thermosetting plastic materials against said wheel (8) surface whereby to dry grind said scrapped fiber reinforced thermosetting plastic materials into a fine powder characterized by using as said grinding wheel (8) a diamond wheel having dense diamond particles of rough grain sizes of more than 270 mesh and blowing over said wheel (8) surface air ionized by high voltage corona discharge whereby to eliminate the static electricity of said fine powder and cool said wheel (8) during the course of pulverizing the fiber reinforced thermosetting plastic materials.

2. An apparatus for pulverizing scrapped fiber reinforced thermosetting plastic materials comprising a grinding wheel (8), on the outer surface of which protrusions (22) provided with particles and separated by grooves (21) void of particles are formed; means (4, 5, 6) for rotating the grinding wheel (8); means for pressing scrapped fiber reinforced thermosetting plastic materials against the outer surface of the grinding wheel (8) whereby to grind said scrapped fiber reinforced thermosetting plastic materials into a fine powder; and means for collecting said fine powder, characterized in that said grinding wheel (8) is a diamond wheel having diamond particles of rough grain sizes of more than 270 mesh densely adhered to the outer surface of the wheel (8) and said apparatus further comprises means for ionizing air by high voltage corona discharge and blowing it over said wheel (8) surface whereby to eliminate the static electricity of said fine powder and cool said wheel.

## Patentansprüche

1. Verfahren zum Pulverisieren von glasfaserverstärkten, wärmeaushärtenden Kunststoffabfallmaterialien, bei dem mit hoher Geschwindigkeit ein Schleifrad (8) rotiert wird, an dessen äußerer Oberfläche mit Partikeln versehene und von partikelfreien Nuten (21) getrennte Vorsprünge (22) gebildet werden, und bei dem das glasfaserverstärkte, wärmeaushärtende Kunststoffabfallmaterial gegen die Radoberfläche gepreßt wird, um dadurch das glasfaserverstärkte, wärmeaushärtende Kunststoffabfallmaterial in ein feines Pulver zu schleifen, dadurch gekennzeichnet, daß als Schleifrad (8) ein Diamantrad mit dichten Diamantpartikeln mit ungefähren Korngrößen von mehr als 270 Mesh verwendet wird und daß über die Radoberfläche durch eine Hochspannungs-Korona-Entladung ionisierte Luft geblasen wird, wodurch die statische Elektrizität des feinen Pulvers beseitigt und das Rad (8) während der Durchführung des Pulverisierens des faserverstärkten, wärmeaushärtenden Kunststoffabfallmaterials gekühlt wird.

2. Vorrichtung zum Pulverisieren faserverstärkten, thermoaushärtenden Kunststoffabfallmaterials mit einem Schleifrad (8), an dessen äußerer Oberfläche mit Partikeln versehene und von partikelfreien Nuten (21) getrennte Vorsprünge (22) gebildet sind; Mitteln (4, 5, 6) zum Rotieren des Schleifrades (8); Mitteln zum Pressen von faserverstärktem, wärmeaushärtendem Kunststoffabfallmaterial gegen die äußere Oberfläche des Schleifrades (8), zum Schleifen des faserverstärkten, wärmeaushärtenden Kunststoffabfallmaterials in ein feines Pulver; und Mitteln zum Sammeln des feinen Pulvers, dadurch gekennzeichnet, daß das Schleifrad (8) ein Diamantrad mit Diamantpartikeln einer ungefähren Korngröße von mehr als 270 Mesh ist, die dicht an der äußeren Oberfläche des Rades (8) angebracht sind, und daß die Vorrichtung weiterhin Mittel zum Ionisieren von Luft durch eine Hochspannungs-Korona-Entladung und zum Blasen der Luft über die Radoberfläche aufweist, um die statische Elektrizität des feinen Pulvers zu eliminieren und das Rad (8) zu kühlen.

## Revendications

1. Procédé de pulvérisation de matières plastiques mises au rebut, thermodurcissables et renforcées par des fibres, comprenant les étapes consistant à faire tourner à grande vitesse une roue de meule (8), sur la surface extérieure de laquelle sont disposées des saillies (22) comportant des particules et séparées par des rainures (21) exemptes de particules, et à presser lesdites matières plastiques mises au rebut thermodurcissables renforcées par des fibres contre la surface de ladite roue (8) afin de meuler ainsi à sec lesdites matières plastiques mises au rebut thermodurcissables renforcées par des fibres en une fine poudre, caractérisé par les étapes consistant à utiliser comme roue de meule (8) une roue au diamant comportant des particules de diamant denses de grosseur moyenne de grain supérieure à 270 mesh, et à souffler sur la surface de ladite roue (8) de l'air ionisé par décharge haute tension à effet corona afin d'éliminer ainsi l'électricité statique de ladite poudre fine et de refroidir ladite roue (8) pendant la pulvérisation des matières plastiques thermodurcissables renforcées par des fibres.

2. Dispositif pour pulvériser des matières plastiques thermodurcissables renforcées par des fibres, mises au rebut, comprenant une roue de meule (8), sur la surface extérieure de laquelle sont formées des saillies (22) comportant des particules et séparées par des rainures (21) exemptes de particules, des moyens (4, 5, 6) pour faire tourner la roue de meule (8), des moyens pour presser les matières plastiques thermodurcissables renforcées par des fibres et mises au rebut contre la surface extérieure de la roue de meule (8), afin de meuler ainsi lesdites matières plastiques mises au rebut thermodurcissables renforcées par des fibres en une fine poudre, et des moyens pour recueillir cette fine poudre, caractérisé en ce que la roue de meule (8) est une roue au diamant comportant des particules de diamant de grosseur de grain moyenne supérieure à 270 mesh adhérant en répartition dense à la surface extérieure de la roue (8), et en ce que ledit dispositif comprend en outre des moyens pour ioniser de l'air par décharge haute tension à effet corona et pour souffler cet air ionisé sur la surface de ladite roue (8) afin d'éliminer ainsi l'électricité statique de ladite poudre fine et de refroidir ladite roue (8).
